(19) Europäisches Patentamt
European Patent Office
Office européen des brevets

(11) **EP 4 745 527 A1**

(12) **DEMANDE DE BREVET EUROPEEN**

(43) Date de publication:
**20.05.2026 Bulletin 2026/21**

(21) Numéro de dépôt: **25211590.2**

(22) Date de dépôt: **28.10.2025**

(51) Classification Internationale des Brevets (IPC):
**G01D 4/00** *(2006.01)* **G06Q 50/06** *(2024.01)*
**G01D 4/12** *(2006.01)* **G01D 4/10** *(2006.01)*

(52) Classification Coopérative des Brevets (CPC):
**G06Q 50/06; G01D 4/002;** G01D 2204/125;
G01D 2204/24

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **19.11.2024 FR 2412656**

(71) Demandeur: **SAGEMCOM ENERGY & TELECOM SAS**
**92270 Bois-Colombes (FR)**

(72) Inventeur: **TEBOULLE, Henri**
**92270 BOIS-COLOMBES (FR)**

(74) Mandataire: **Novagraaf Technologies**
**2 rue Sarah Bernhardt**
**CS90017**
**92665 Asnières-sur-Seine Cedex (FR)**

(54) **PROCEDE ET DISPOSITIF DE DESAGREGRATION DE DONNEES DE CONSOMMATION DE FLUIDE**

(57)     Est divulgué un procédé de désagrégation de données de consommation de fluide, utilisant la consommation électrique individuelle (Ce_i) pour chaque appareil électrique (i) consommateur de fluide du système, sur une période de temps et la consommation de fluide globale (Ccw1) de tous les appareils consommateurs de fluide du système ; et comprenant
- la détermination (502) de la consommation de fluide (Cw_i) de chaque appareil électrique (i) consommateur de fluide ;
- la détermination (503) d'une première consommation de fluide restante autre que celle due aux appareils électriques consommateurs de fluide ;
- la désagrégation (504) de la première consommation de fluide restante (Ccw2), par appareil non-électrique consommateur de fluide, par recherche de phases d'activité de l'appareil non-électrique considéré dans les données représentatives de la première consommation de fluide restante, une phase d'activité étant identifiée par un volume de consommation de fluide lors de la phase d'activité et une durée de phase d'activité.

Fig. 3

**Description**

DOMAINE TECHNIQUE

Les différents exemples de réalisation décrits dans la présente divulgation concernent un procédé et un dispositif de désagrégation de données de consommation de fluide. Le dispositif peut notamment être, mais de façon non limitative, un compteur électrique local, un serveur distant, ou tout appareil muni d'un processeur et exécutant un code logiciel adapté.

ARRIERE PLAN

On consomme souvent une ressource sans être pleinement conscient de l'importance de cette consommation. Ainsi, le fait d'utiliser de manière répétée une chasse d'eau pendant la journée peut causer une consommation excessive d'eau. Les utilisateurs ne sont pas forcément conscients de la fréquence de l'utilisation de la chasse d'eau, ni des volumes d'eau utilisés. La connaissance de la consommation de fluide, et notamment d'eau, par des équipements individuels dans un foyer domestique peut contribuer à une prise de conscience des utilisateurs quant à l'utilisation de la ressource et permettre ainsi une utilisation plus raisonnée. Il est donc utile de proposer à un abonné d'un réseau de consommation d'une ressource fluide (eau, gaz...) des données d'utilisation de la ressource par appareil, dites 'données désagrégées'.

Il a été proposé de munir les différents équipements d'un foyer d'appareils de mesure individuels. Cependant, c'est une approche coûteuse. Il est donc préférable de désagréger la consommation globale du foyer.

Il existe des techniques de désagrégation de données de consommation électrique permettant de déterminer quels équipements électriques ont consommé de l'électricité, par exemple dans un local d'habitation. Ces techniques sont cependant difficilement transposables à des données de consommation de fluide, tels le gaz et l'eau, pour déterminer quels équipements sont consommateurs de fluide, ou encore pour déterminer la consommation de chaque équipement en fonction du temps. En effet, on ne peut raisonner de la même manière pour l'électricité d'une part et pour le gaz et l'eau de l'autre. Les consommations d'électricité de différents équipements s'ajoutent, et une courbe de charge totale du local donne des indications sur les équipements électriques consommateurs. En revanche, en prenant l'exemple de l'eau, celle-ci est souvent tirée à débit constant, au maximum des capacités de l'arrivée d'eau. Il est ainsi difficile de déterminer, à partir de la consommation d'eau en fonction du temps, le ou les équipements parmi plusieurs équipements candidats qui consomment effectivement de l'eau à un moment donné.

Il a été suggéré d'utiliser les données de consommation électrique pour affiner une désagrégation de données relatives à de l'eau. Cependant, les techniques employées exigent des moyens de calcul relativement importants, peu compatibles avec les moyens de calcul disponibles dans certains équipements domestiques, tels des compteurs électriques.

Une solution efficace mais peu exigeante en termes de capacité de calcul et pouvant de ce fait être mise en oeuvre par des appareils possédant des moyens de calcul limités est donc souhaitée.

RESUME DE L'INVENTION

Un premier aspect concerne un procédé mis en œuvre par un dispositif comprenant un processeur pour déterminer la consommation de fluide par un appareil non-électrique dans un système comprenant au moins un appareil électrique consommateur de fluide, et au moins un appareil non-électrique consommateur de fluide, le procédé comprenant :

- l'obtention :

    a) de données représentatives de l'évolution en fonction du temps de la consommation électrique individuelle pour chaque appareil électrique consommateur de fluide du système, sur une période de temps ;
    b) de données représentatives de l'évolution en fonction du temps de la consommation de fluide globale de tous les appareils consommateurs de fluide du système sur la période de temps ;

- la détermination de données représentatives de l'évolution en fonction du temps sur la période de la consommation de fluide de chaque appareil électrique consommateur de fluide par identification de phases d'activité de cet appareil électrique dans les données représentatives de l'évolution en fonction du temps de la consommation électrique individuelle de cet appareil électrique ;
- la détermination de données représentatives de l'évolution en fonction du temps sur la période, d'une première consommation de fluide restante autre que celle due aux appareils électriques consommateurs de fluide ;
- la désagrégation des données représentatives de l'évolution en fonction du temps sur la période de la première consommation de fluide restante, par appareil non-électrique consommateur de fluide, par recherche de phases d'activité de l'appareil non-électrique considéré dans les données représentatives de la première consommation de fluide restante,

une phase d'activité étant identifiée par un volume de consommation de fluide lors de la phase d'activité et une durée de phase d'activité.

On caractérise les dispositifs non-électriques utilisateurs de fluide par un volume de consommation et des plages temporelles associées, et ce ne sont que ces données simples qui sont utilisées lors de la désagrégation de la courbe de charge de fluide, dans laquelle on aura préalablement supprimé les consommations dues aux équipements électriques également consommateurs de fluide.

Des compteurs de fluide dédiés par équipement ne sont pas nécessaires, et il n'est pas non plus nécessaire d'employer des modèles d'intelligence artificielle ou des modèles à apprentissage profond exigeants en termes de capacité de calcul.

La divulgation s'applique particulièrement à un foyer domestique.

Selon un mode de réalisation, l'assemblage de courbes de charge en fluide correspondant aux différentes phases d'activité identifiées dans les données représentatives de l'évolution en fonction du temps de la consommation électrique individuelle (Ce_i) de l'appareil électrique, le dispositif disposant, pour chaque phase d'activité de cet appareil électrique d'une courbe de charge en fluide couvrant cette phase d'activité.

Selon un mode de réalisation, la détermination de données représentatives de l'évolution en fonction du temps sur la période d'une seconde consommation de fluide restante, par soustraction aux données représentatives de l'évolution dans le temps de la première consommation de fluide restante, des données représentatives de l'évolution dans le temps des consommations correspondant aux phases d'activité trouvées pour les appareils non-électriques consommateurs de fluide.

Selon un mode de réalisation, un appareil non-électrique consommateur de fluide comprend une pluralité de modes de fonctionnement, chaque mode de fonctionnement étant associé à une phase d'activité identifiée par un volume de consommation et une durée de phase de consommation propres.

Selon un mode de réalisation, la recherche d'une phase d'activité comprenant l'identification d'une consommation constante correspondant au volume de consommation de cette phase d'activité, sur la durée de la phase d'activité.

Selon un mode de réalisation, le procédé comprend une phase d'apprentissage préalable pour l'obtention des données représentatives de l'évolution de la consommation de fluide par appareil électrique consommateur de fluide en fonction du temps, pour une phase d'activité de l'appareil électrique consommateur de fluide considéré, la phase d'apprentissage comprenant pour chaque appareil électrique consommateur de fluide :

- l'identification de N phases d'activité lors desquelles seul le dispositif considéré a été actif, avec N>1 ;
- pour chaque phase d'activité identifiée, l'extraction d'une partie correspondante en temps de données représentatives de l'évolution dans le temps de la consommation en fluide globale historique ;

- la sélection, parmi les parties extraites, de la partie avec la consommation de fluide cumulée la plus faible en tant que données représentatives de l'évolution de la consommation de fluide par appareil électrique consommateur de fluide en fonction du temps.

Selon un mode de réalisation, le procédé comprend une phase d'apprentissage préalable pour la détermination d'un volume et d'une durée pour une phase d'activité d'un appareil non-électrique consommateur de fluide, la phase d'apprentissage comprenant :

- l'obtention de données empiriques définissant, pour un ou plusieurs types d'appareil non-électrique consommateur de fluide, une durée respective de phase d'activité et un volume respectif de fluide consommé durant la phase d'activité ;
- l'obtention de données représentatives de l'évolution dans le temps de la consommation globale en fluide sur une période historique ;
- l'obtention de données représentatives de l'évolution dans le temps de la consommation individuelle électrique de chaque appareil électrique consommateur de fluide pour la période historique ;
- l'identification, dans les parties des données de la consommation globale en fluide pendant lesquelles aucun dispositif électrique consommateur de fluide n'a été actif, des intervalles de temps correspondant aux critères de volume et de durée d'activité de phases d'activité d'appareils non-électriques consommateurs de fluide de chaque type d'appareil ;
- l'ajustement d'au moins les valeurs de volume de consommation et de durée de phase d'activité sur base des valeurs de consommation et de durée de phase d'activité des intervalles identifiés.

Selon un mode de réalisation, l'obtention de données représentatives de l'évolution en fonction du temps de la consommation électrique individuelle pour chaque appareil électrique consommateur de fluide du système, sur une période de temps comprend :

- la détection d'une ou plusieurs durées de phase d'activité de l'appareil électrique consommateur de fluide ;
- pour chaque durée de phase d'activité détectée, l'identification de la ou des parties des données représentatives de l'évolution en fonction du temps de la consommation en fluide globale temporellement correspondantes aux phases d'activité détectées, seules les parties des données de consommation en fluide globale pendant lesquelles aucun autre dispositif électrique consommateur de fluide n'est actif étant considérées ;
- pour chaque durée de phase d'activité, détermination parmi les X parties les plus récemment identifiées de celle avec une consommation minimale cumulée sur la durée, la partie déterminée étant prise comme données représentatives de l'évolution en fonction du temps de la consommation électrique individuelle pour la phase d'activité considérée de l'appareil, avec X>1.

Selon un mode de réalisation, le procédé comprend le système est un foyer domestique.

Selon un mode de réalisation, le procédé comprend au moins l'un parmi :

-  une transmission des données représentatives de l'évolution en fonction du temps sur la période de la première consommation de fluide restante, par appareil non-électrique consommateur de fluide ;
-  un affichage des données représentatives de l'évolution en fonction du temps sur la période de la première consommation de fluide restante, par appareil non-électrique consommateur de fluide.

Un autre aspect concerne un dispositif muni d'un processeur et d'une mémoire comportant des instructions logicielles, le dispositif étant amené à mettre en oeuvre l'un des procédés décrits lorsque le processeur exécute les instructions.

Selon un ou plusieurs modes de réalisation, le dispositif est l'un parmi : un compteur électrique, un serveur.

BREVE DESCRIPTION DES FIGURES

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.

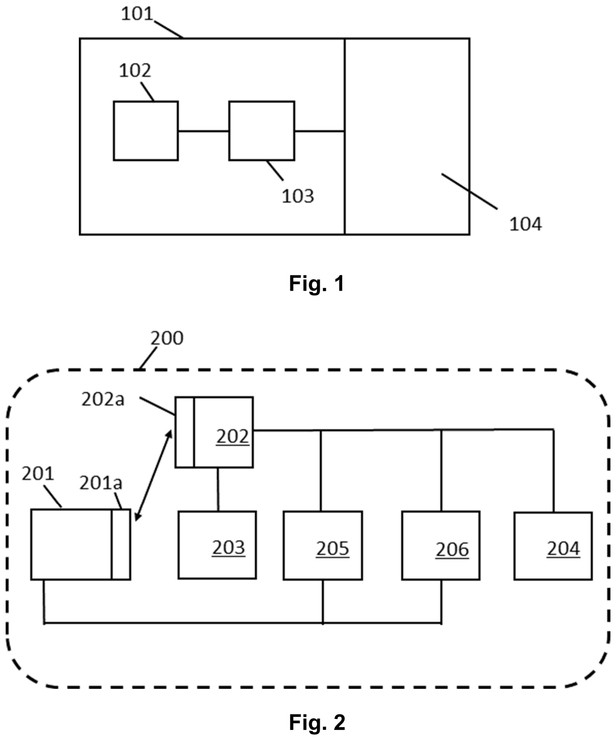

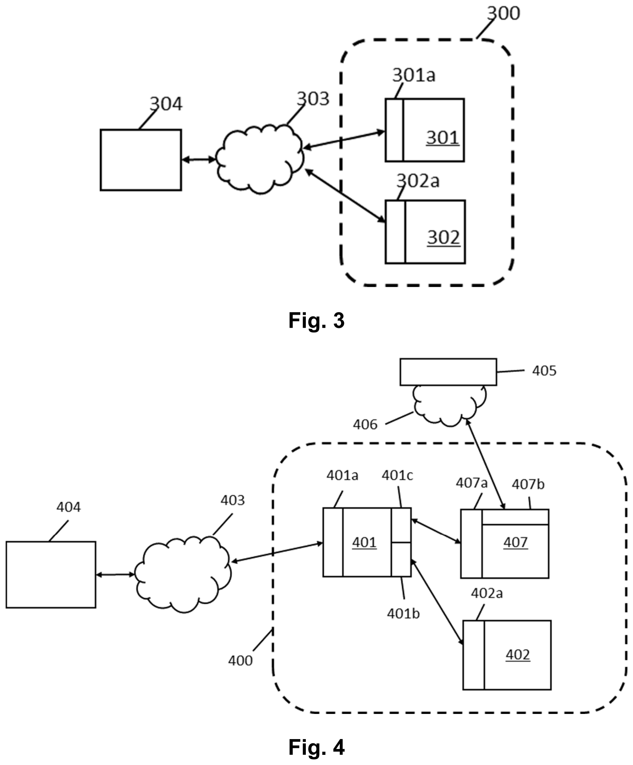

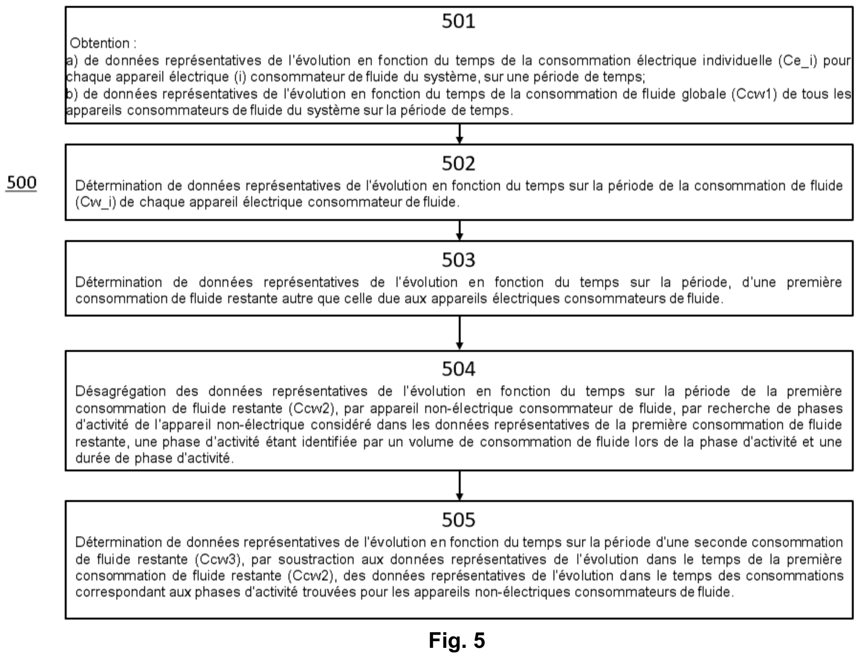

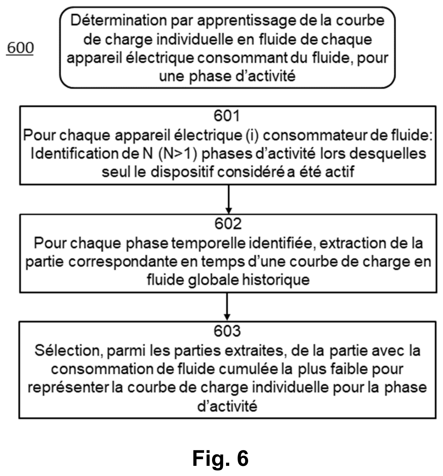

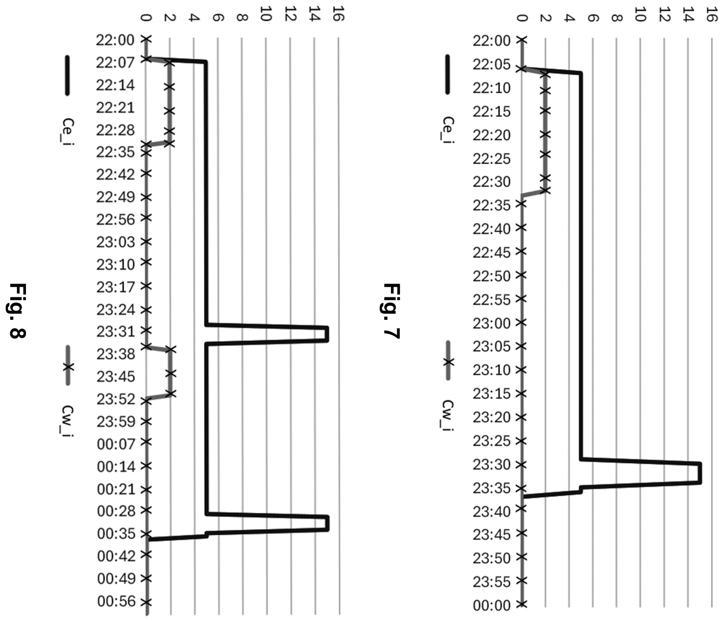

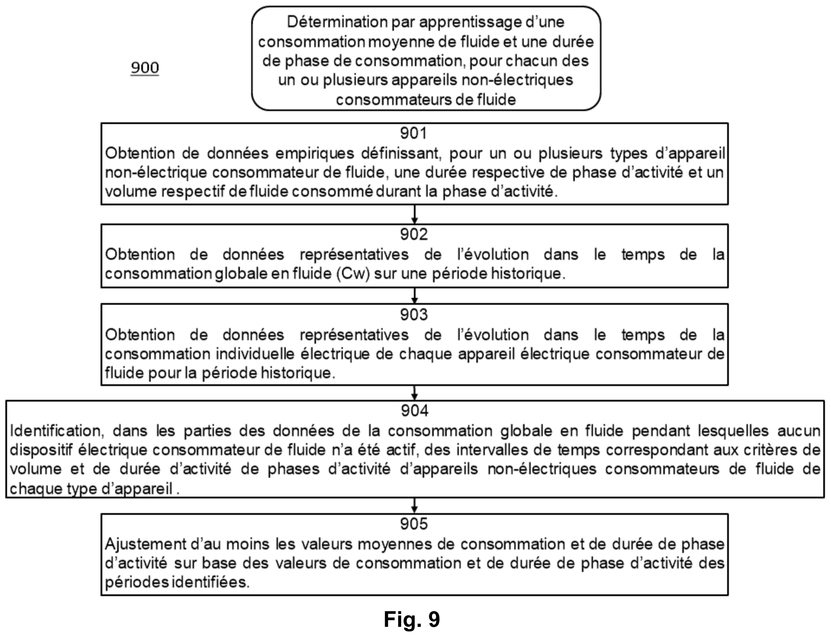

La figure FIG. 1 est un diagramme.
La figure FIG. 2 est un diagramme bloc schématique d'un premier exemple de système comportant un dispositif selon la figure.
La figure FIG. 3 est un diagramme bloc d'un second exemple de système.
La figure FIG. 4 est un diagramme bloc d'un troisième exemple de système.
La figure FIG. 5 est un algorigramme d'un procédé de désagrégation de données de consommation de fluide selon un ou plusieurs exemples de réalisation.
La figure FIG. 6 est un algorigramme illustrant un premier exemple d'une phase d'apprentissage.
La figure FIG. 7 est un graphique représentant une courbe de charge électrique et d'eau pour un premier programme d'un lave-linge.
La figure FIG. 8 est un graphique représentant une courbe de charge électrique et d'eau pour un second programme d'un lave-linge.
La figure FIG. 9 est un algorigramme illustrant un second exemple d'une phase d'apprentissage.

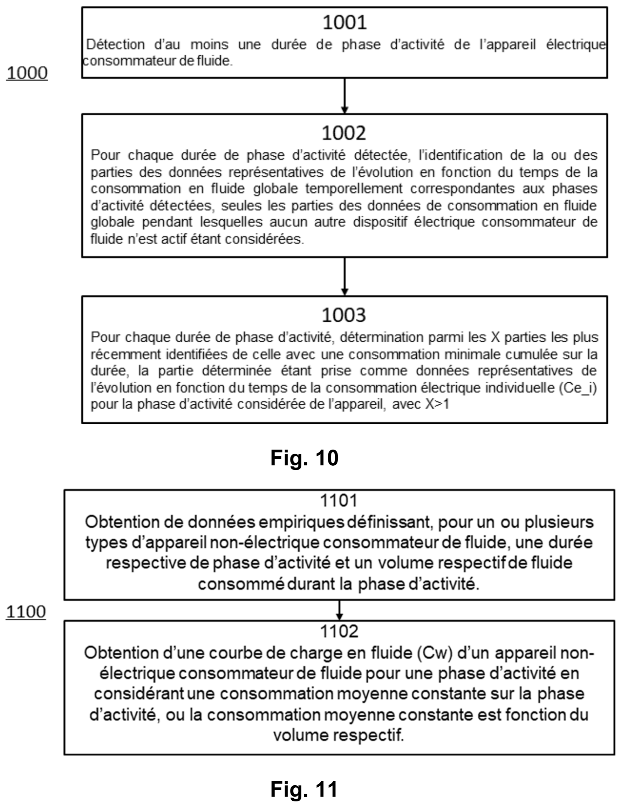

La figure FIG. 10 est un algorigramme d'un procédé de détermination de la courbe de charge individuelle de fluide pour une phase d'activité d'appareil électrique consommateur de fluide.
La figure FIG. 11 est un algorigramme d'un procédé de détermination des données représentatives de la consommation moyenne de fluide et de durée de phase de consommation, par appareil non-électrique consommateur de fluide, sans apprentissage préalable.

DESCRIPTION DETAILLEE

Divers exemples de réalisation vont maintenant être décrits plus en détail, à titre d'exemples non limitatifs, en référence aux dessins qui accompagnent la présente divulgation et qui illustrent certains exemples de réalisation.

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

Dans la description qui va suivre, des éléments identiques, similaires ou analogues seront désignés par les mêmes chiffres de référence. Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en oeuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en oeuvre à l'aide de plus ou de moins de composants ou de phases, ou encore avec d'autres composants ou à travers d'autres phases. Tout système de traitement de données adapté peut être utilisé pour l'implémentation.

Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en oeuvre tout ou partie des fonctionnalités des blocs et/ou des phases des procédés ou méthodes selon les exemples de réalisation. Le code logiciel peut être stocké dans une mémoire non volatile ou sur un support de stockage non volatile (clé USB, carte mémoire ou autre support) lisible directement ou à travers une interface adaptée par le processeur ou contrôleur.

Les modes de réalisation divulgués concernent la désagrégation de données de consommation de fluide (eau, gaz...) pour divers équipements consommateurs de fluide. Ces équipements peuvent être des équipements électriques ou non électriques. Par désagrégation, on entend la détermination de la consommation individuelle en fluide d'équipements consommateurs de fluide, électriques ou non, à partir de données représentatives d'une consommation globale, par exemple la consommation telle que celle mesurée par un dispositif métrologique déterminant la consommation globale d'un foyer.

A titre d'exemple, dans le cadre d'un environnement domestique, les types d'équipements électriques consommateurs d'eau peuvent typiquement comprendre (liste non exhaustive) :

- Un lave-linge
- Un lave-vaisselle
- Un sanibroyeur
- Une pompe de remplissage de piscine
- Un arrosage automatique de jardin

Dans le même cadre, les types d'équipements non-électriques consommateurs de fluide (de l'eau dans le cadre de l'exemple) peuvent comprendre (liste non exhaustive) :

- Une chasse d'eau
- Une douche
- Une baignoire

Il s'agit là d'équipements non-électriques consommateurs de fluide qu'il est possible d'associer à un volume d'eau consommée et à une durée d'activité pendant laquelle la consommation a lieu. Ces deux quantités peuvent être assorties de marges d'erreur. Par exemple ; une chasse d'eau aura, selon un mode de fonctionnement, une consommation de 6,1 litres d'eau ± 3 litres sur une durée de 45s ± 30s. On considérera dans la présente divulgation que la consommation en fluide se fait en continu à valeur constante sur l'ensemble de la période d'activité d'un équipement non-électrique consommateur de fluide.

Il se peut qu'il y ait des équipements/appareils non-électriques de fonction identique mais de types distincts car définis par des paramètres ayant des valeurs distinctes : un volume de consommation de fluide lors de la phase d'activité et/ou une durée de phase d'activité différents. Par exemple, on peut avoir deux chasses d'eau différentes parce que leur volume d'eau est différent - dans ce cas, elles auront chacun leur type et elles pourront être distinguées en tant qu'équipements différents. A contrario, si deux équipements/appareils d'un foyer ont des paramètres de fonctionnement identiques (par exemple deux chasses d'eau identiques), ils seront considérés comme un seul équipement/appareil.

Une consommation d'eau supplémentaire peut être due par exemple à des fuites dans le réseau de l'abonné ou encore à des robinets de cuisine ou de salle de bain (liste non exhaustive).

Lorsque le fluide considéré est le gaz, les équipements électriques consommant du gaz peuvent comprendre une chaudière à gaz (liste non exhaustive).

Selon un mode de réalisation particulier, un équipement consommateur d'électricité et/ou de fluide peut avoir des modes de fonctionnement différents, correspondant à des plages de fonctionnement et des consommations différentes. Une prise en compte de ces différents modes permet d'améliorer grandement la désagrégation.

Bien que dans ce qui suit, il sera généralement question d'eau, les exemples décrits s'appliquent tout aussi bien à un autre fluide tel le gaz.

La FIG. 1 est un diagramme bloc fonctionnel d'un exemple non limitatif d'un dispositif 101 mettant en œuvre l'un des procédés décrits selon un ou plusieurs modes de réalisation.

Le dispositif comprend une mémoire non volatile 102, un processeur 103 et une interface de communication 104, ces éléments étant reliés par un bus de communication interne. La mémoire 102 comprend du code logiciel. Le dispositif est configuré pour mettre en œuvre l'un des procédés décrits lorsque le processeur exécute le code logiciel.

Le dispositif 101 peut comprendre des composants différents ou supplémentaires. Selon un cas d'usage, le dispositif 101 est un compteur électrique et comportera alors des composants de ce type d'équipement : un coupe-circuit, un processeur métrologique, des bornes électriques, une interface homme-machine... Selon d'autres cas d'usage, le dispositif 101 est un ordinateur ou un serveur. Le dispositif 101 est par exemple un serveur d'un opérateur de réseau de distribution d'énergie ou de fluide, ou un serveur du nuage ('cloud' en langue anglaise).

Selon les implémentations, le dispositif 101 peut recevoir tout ou partie des données nécessaires pour la mise en œuvre de l'un des procédés décrits. Il peut générer une partie de ces données lui-même, par exemple lorsque le dispositif 101 est un compteur électrique.

Les FIG. 2, FIG. 3 et FIG 4 sont des diagrammes bloc schématiques de trois architectures de systèmes comportant un dispositif 101 selon la présente divulgation. Les architectures diffèrent concernant le dispositif mettant en œuvre l'un des procédés décrits et sur la façon dont les données en entrée du procédé parviennent à ce dispositif. Il s'agit là de quelques exemples correspondant à des situations réelles. Cependant, d'autres architectures peuvent bien entendu être envisagées.

Selon l'exemple de la FIG. 2, le procédé est mis en oeuvre localement par un compteur électrique.

La FIG. 2 montre un local 200, par exemple le domicile d'un abonné au réseau électrique. Le système comprend un compteur électrique 201, comprenant une interface de communication 201a. Le compteur 201 met en oeuvre l'un des procédés décrits - c'est par exemple le dispositif 101 de la FIG. 1. Le local comprend par ailleurs au moins un compteur de fluide 202, le compteur de fluide comprenant une interface de communication 202a. Le compteur de fluide est par exemple un compteur d'eau ou un compteur de gaz, en notant que plusieurs compteurs de ressources différentes peuvent être présents selon les implémentations. Pour la clarté des exemples, on prendra en considération un seul compteur de fluide, soit un compteur d'eau. Les dispositifs 201 et 202 mesurent les consommations globales respectives d'électricité et d'eau d'appareils dans le local.

Le local 200 comporte un ou plusieurs appareils domestiques. Le local 200 comporte par exemple un ou plusieurs appareils électriques consommateurs d'eau (dispositifs 205 et 206) et un ou plusieurs dispositifs non-électriques consommateurs d'eau (dispositifs 203 et 204).

Les dispositifs 201 et 202 échangent des données via leurs interfaces de communication respectives. Ces interfaces de communication sont par exemple des interfaces sans fil de type 'WM-Bus'. Le compteur électrique 201 peut ainsi recevoir la courbe de charge du compteur d'eau 202. Les échanges de données peuvent optionnellement être chiffrés.

Le compteur électrique 201 est configuré pour mettre en oeuvre l'une des méthodes décrites. L'utilisateur abonné peut alors obtenir les résultats de la désagrégation directement auprès du compteur électrique (par exemple par visualisation sur un écran du compteur, chargement sur un téléphone mobile ou un ordinateur...).

La FIG. 3 est un exemple d'une autre architecture, dans laquelle un serveur reçoit les données de consommation d'électricité et de fluide et effectue le traitement selon l'un des procédés décrits. Le serveur est par exemple un serveur distant communiquant avec les compteurs à travers un réseau de communication adapté. Ceci est avantageux dans la mesure où l'on met à profit une interface existante de compteurs connectés avec un réseau de communication externe pour également transmettre les données en entrée du procédé. Du point de vue de l'infrastructure, cette architecture est donc particulièrement intéressante.

Un foyer d'abonné 300 comprend un compteur électrique 301 muni d'une interface de communication 301a, et un compteur de fluide 302, muni d'une interface de communication 302a. Les deux compteurs communiquent avec un serveur 304, qui est par exemple un serveur de l'opérateur du réseau de distribution d'électricité. Le réseau de communication 303 mis en oeuvre est par exemple un réseau cellulaire. Les divers appareils consommateurs d'électricité et/ou de fluide présents dans le local ne sont pas illustrés pour la clarté de la figure.

Selon l'exemple de la FIG. 3, le compteur électrique 301 réalise la désagrégation des données électriques et fournit ainsi directement les courbes de charge de chaque dispositif électrique au serveur 304. Le compteur d'eau transmet quant à lui la courbe de charge globale d'eau au serveur 304. Le serveur 304, qui peut être le dispositif de la FIG. 1, met en oeuvre l'un des procédés décrits. Les divers appareils domestiques présents ne sont pas illustrés pour la clarté de la figure.

L'utilisateur abonné peut alors obtenir les résultats de la désagrégation auprès du serveur 304, par exemple par l'intermédiaire d'une application sur son téléphone mobile ou son ordinateur.

La FIG. 4 est un troisième exemple d'une architecture, dans laquelle un des procédés décrits est mis en oeuvre par un serveur 405 dans le nuage ('cloud' en anglais) 406, les données en entrée du procédé étant transmises par le compteur électrique 401 d'un local d'abonné 400 au serveur 405 à travers une passerelle internet (« box » en anglais) 407. La courbe de charge en consommation d'eau est transmise par un compteur d'eau 402 au compteur électrique 401 localement, avant transmission par ce dernier au serveur 'cloud' 405. Le serveur 'cloud' 405 peut transmettre en retour les résultats en sortie du procédé au compteur électrique 401, pour accès par l'utilisateur. La FIG. 4 illustre par ailleurs un serveur 404 de l'opérateur du réseau électrique et un réseau 403 utilisé pour la communication avec le compteur électrique 401.

Comme pour les architectures précédentes, les dispositifs de la FIG. 4 comportent des interfaces de communication pour les échanges mentionnés. Une référence du type x.y désigne une interface y d'un dispositif x. Par exemple et ce de façon non limitative, les interfaces 401b et 402a peuvent être des interfaces WM-Bus, les interfaces 401c et 407a peuvent être des interfaces IEEE 802.11 ('Wi-Fi'), l'interface 407b peut être une interface fibre, câble ou ADSL, l'interface 401a peut être une interface de réseau cellulaire.

Selon un mode de réalisation non limitatif illustré à la FIG. 5, un procédé 500 de désagrégation de données de consommation de fluide comprend :

- 501 : L'obtention

    a) de données représentatives de l'évolution en fonction du temps de la consommation électrique individuelle (Ce_i) pour chaque appareil électrique (i) consommateur de fluide du système, sur une période de temps ;
b) de données représentatives de l'évolution en fonction du temps de la consommation de fluide globale (Ccw1) de tous les appareils consommateurs de fluide du système sur la période de temps.

Il est à noter que les données représentatives de l'évolution de la consommation électrique individuelle (Ce_i) pour chaque appareil électrique (i) consommateur de fluide du système en fonction du temps, sur une période de temps, peuvent être obtenues directement par le dispositif 101 à partir d'un dispositif tiers ayant réalisé une désagrégation d'une courbe de charge électrique globale, ou alors cette désagrégation est réalisée par le dispositif 101 lui-même.

- 502 : La détermination de données représentatives de l'évolution en fonction du temps sur la période de la consommation de fluide (Cw_i) de chaque appareil électrique consommateur de fluide.
- 503 : La détermination de données représentatives de l'évolution en fonction du temps sur la période, de la consommation de fluide restante autre que celle due aux appareils électriques consommateurs de fluide (Ccw2). Ceci peut se faire par simple soustraction aux données de la consommation de fluide globale (Ccw1), des données de la consommation de fluide (Cw_i) de chaque appareil électrique consommateur de fluide (

$$Ccw2 = Ccw1 - \sum_{i=1}^{i=N} Cw\_i$$

). . La soustraction se fait par exemple échantillon par échantillon, entre échantillons correspondant au même instant.
- 504 : La désagrégation de l'évolution en fonction du temps de la première consommation de fluide restante (Ccw2) sur la période, par type d'appareil non-électrique consommateur de fluide, par recherche de phases d'activité du type d'appareil non-électrique considéré dans les données représentatives de l'évolution en fonction du temps de la première consommation de fluide restante, une phase d'activité étant identifiée par un volume de consommation de fluide lors de la phase d'activité et une durée de la phase d'activité.

La détermination de la courbe de charge individuelle de fluide (Cw_i) pour chaque appareil électrique (i) consommateur de fluide est effectuée en identifiant les phases d'activité de cet appareil dans la courbe de charge électrique individuelle de cet équipement. On dispose pour chaque phase d'activité d'un appareil d'une courbe de charge en fluide couvrant la phase d'activité. Une courbe de charge en fluide couvrant une phase d'activité est obtenue par exemple soit par apprentissage préalable, soit par analyse continue des données en entrée du procédé. Ces deux possibilités seront détaillées plus loin. La courbe de charge individuelle de fluide de l'appareil est obtenue par assemblage de courbes de charge en fluide correspondant aux différentes phases d'activité identifiées. Par exemple, si un lave-linge est utilisé à 10h avec le programme 1 et à 16h avec le programme 2, sa courbe de charge individuelle en fluide sur une journée sera obtenue en insérant la courbe de charge en fluide correspondant au programme 1 à 10h et celle correspondant au programme 2 à 16h, la consommation étant nulle lors de journée en dehors de ces deux phases d'activité.

Optionnellement, il est également possible de déterminer, lors d'une étape 505, la courbe de charge ('Ccw3'), correspondant aux consommations de fluide diverses dues à des appareils ou équipements n'ayant pas donné lieu à désagrégation en soustrayant de Ccw2 l'ensemble des consommations de fluide déterminées à l'étape 504. Cette étape peut être libellée comme suit : Détermination de données représentatives de l'évolution en fonction du temps sur la période d'une seconde consommation de fluide restante (Ccw3), par soustraction aux données représentatives de l'évolution dans le temps de la première consommation de fluide restante (Ccw2), des données représentatives de l'évolution dans le temps des consommations correspondant aux phases d'activité trouvées pour les appareils non-électriques consommateurs de fluide.

Des appareils ou équipements n'ayant pas donné lieu à désagrégation sont par exemple des appareils ou équipements pour lesquels des données de consommation moyenne de fluide et de durée de phase de consommation ne sont pas disponibles ou n'ont pas de sens, comme par exemple la consommation d'un robinet de cuisine.

Les données représentatives de l'évolution de la consommation d'électricité ou de fluide en fonction du temps sont aussi appelées 'courbes de charge' (courbe de charge électrique, ou courbe de charge en fluide). Une courbe de charge 'globale' couvre la consommation de l'ensemble des appareils servis par une même source reliée à un compteur qui permet de mesurer la consommation de la ressource fournie par cette source. Une courbe de charge 'individuelle' couvre la consommation d'un seul appareil. De manière générale, on considérera les courbes de charge globales et individuelles sur une même période de temps. Il sera également question de courbes de charge correspondant uniquement à une phase d'activité d'un équipement.

A titre d'exemple, une courbe de charge peut par exemple être représentée par des données consécutives de consommation. A titre d'exemple nonlimitatif mais réaliste dans un contexte domestique, les données peuvent avoir une fréquence d'échantillonnage par exemple d'une minute, sur une période totale d'une journée. D'autres fréquences d'échantillonnage et durées de période peuvent bien entendu être choisies en fonction du cas d'usage et/ou de la précision demandée etc... Les valeurs données ne le sont qu'à titre d'exemple d'un cas d'usage réel. Dans la présente divulgation, on parlera indistinctement de courbes de charge pour une période de temps, et de données représentatives de l'évolution de la consommation d'électricité, de fluide... en fonction du temps pour la période de temps. Dans certaines étapes décrites, des courbes de charge doivent être soustraites. Par exemple, des courbes de charge en fluide correspondant à des phases d'activité d'équipements électriques doivent être soustraites à une courbe de charge globale en fluide. La personne du métier saura ajuster le cas échéant les fréquences d'échantillonnage si elles devaient différer et faire correspondre temporellement les échantillons des différentes courbes de charge pour que la soustraction puisse s'effectuer correctement.

Le procédé de désagrégation utilise les courbes de charge individuelles de consommation électrique (Ce_i) des appareils électriques consommateurs de fluide. L'obtention de ces courbes de charge individuelles de consommation électrique est, en tant que telle, en dehors de l'objet de la présente divulgation. Selon un exemple particulier, ces courbes de charge individuelles de consommation électrique sont obtenues par désagrégation de la courbe de charge globale de consommation électrique (Ce). Cette désagrégation sera typiquement réalisée par le compteur électrique, les données désagrégées étant fournies au dispositif 101 si ce dernier n'est pas le compteur électrique. Dans le premier cas, la courbe de charge globale de consommation électrique est alors l'une des données en entrée du procédé de la FIG. 5. En pratique, la désagrégation sera - en général, mais non obligatoirement - réalisée par un compteur électrique, qui dispose directement de la courbe de charge électrique globale, étant donné que la production des données représentant la courbe de charge fait naturellement partie de ses fonctions. Le compteur électrique peut alors soit utiliser les données désagrégées lui-même ou, si le procédé est mis en oeuvre par un autre dispositif, les transmettre à cet autre dispositif.

Des procédés de désagrégation d'une courbe de charge électrique globale sont connus par ailleurs. Un exemple est donné dans (i), qui développe un modèle génératif permettant de simuler des données hautes fréquences de courant électrique et qui utilise des techniques d'apprentissage non-supervisés sur base d'une méthode appartenant à la famille des factorisations de matrices appelées 'IVMF' (pour 'Independent-Variation Matrix Factorization' en anglais ou 'Factorisation de Matrices à Variation Indépendante') et qui permet d'exprimer une matrice d'observation de courant comme le produit de deux matrices : les signatures et les activations.

Selon un mode de réalisation, des phases d'apprentissage ou non peuvent être prévues pour déterminer au moins l'un parmi :

- les données représentatives de l'évolution de la consommation de fluide (Cw_i) par appareil électrique consommateur de fluide en fonction du temps, pour une phase d'activité, et
- les données représentatives de la consommation moyenne de fluide et de durée de phase de consommation, par appareil non-électrique consommateur de fluide, pour une phase d'activité.

Il s'agit là des courbes de charge individuelles en fluide des appareils électriques ou non-électriques pour des phases d'activité individuelles, qui seront ensuite utilisées pour composer les courbes de charge individuelles complètes sur toute la période de temps considérée. Ces phases d'apprentissage sont réalisées avant la mise en oeuvre du procédé selon la FIG. 5.
Selon une variante particulière, on réalise la première phase d'apprentissage ci-dessus et on utilise des données empiriques en lieu et place de la seconde phase.

Les données représentatives des courbes de charge individuelles de consommation électrique permettent de connaître précisément l'heure de début (Td) et l'heure de fin (Tf) de la période d'activité d'un équipement électrique aussi consommateur de fluide, et donc les phases d'activité de cet équipement. Il est à noter qu'une consommation de fluide n'est pas forcément présente durant toute la durée d'activité d'un appareil électrique consommateur de fluide. Un lave-linge peut très bien avoir une phase de remplissage, puis ne plus consommer d'eau jusqu'à une phase de rinçage.

La FIG. 6 est un algorigramme illustrant un exemple non limitatif d'une phase d'apprentissage 600 pour déterminer la courbe de charge en fluide (Cw_i) d'un équipement électrique pendant une phase d'activité dudit équipement. La connaissance de cette courbe de charge en fluide pour une phase d'activité permet ensuite de déterminer la part de fluide consommée par l'équipement, lors de ses différentes phases d'activité, dans la courbe de charge globale de fluide du foyer.

Le procédé de la FIG. 6 comprend :

- l'identification (601) de N phases d'activité lors desquelles seul le dispositif considéré a été actif, avec N>1 ;
- pour chaque phase d'activité identifiée, l'extraction (602) d'une partie correspondante en temps de données représentatives de l'évolution dans le temps de la consommation en fluide globale historique ;
- la sélection (603), parmi les parties extraites, de la partie avec la consommation de fluide cumulée la plus faible en tant que données représentatives de l'évolution de la consommation de fluide (Cw_i) par appareil électrique consommateur de fluide en fonction du temps.

L'apprentissage est effectué pour chaque dispositif électrique consommateur de fluide. Il est réalisé sur des données couvrant une période historique et comprenant :

- les courbes de charge individuelles de consommation électrique (Ce_i) des dispositifs électriques consommateurs de fluide pour la période historique, et
- la courbe de charge globale en consommation de fluide pour la période historique.

La phase d'apprentissage peut s'effectuer - par exemple - sur une période historique de l'ordre d'une semaine, ou beaucoup plus selon les dispositifs présents, dans le but de disposer d'assez de phases où tout équipement a des phases actives propres sans que d'autres dispositifs ne soient actifs en même temps.

Selon un exemple de réalisation de la phase d'apprentissage possédant des avantages particuliers ; pour chaque dispositif électrique consommateur de fluide, on identifie N (N>1) phases temporelles d'activité lors desquelles seul le dispositif considéré est actif. Cette identification est réalisée grâce aux courbes de charge individuelles électriques. On considère la courbe de charge de consommation d'eau globale Cw lors de ces N phases. Bien que seul le dispositif considéré soit actif, il se peut que d'autres équipements, non-électriques, consomment du fluide lors des phases identifiées. Pour limiter le risque d'une mauvaise estimation, on sélectionne la phase parmi les N phases sélectionnées pour laquelle la consommation d'eau totale sur la phase est la plus faible. La mise en oeuvre de N phases permet ainsi de réduire l'impact potentiel de d'équipements consommateurs d'eau divers. A titre d'exemple on peut prendre N=3.

La phase d'apprentissage peut être réalisée indépendamment pour plusieurs modes ou programmes de fonctionnement distincts. Par exemple, un lave ligne possède en général plusieurs modes de lavage, de durée respective et consommant des quantités d'eau différentes. Une désambiguation des modes d'un dispositif peut être basée sur leur durée. Les figures 7 et 8 sont des graphiques représentant deux courbes de charge électriques et d'eau pour deux programmes d'un lave-linge distincts et correspondant donc à deux phases d'activité différentes. On considèrera pour simplifier qu'une 'phase d'activité' correspond à la période pendant laquelle la consommation en électricité n'est pas nulle. Sur la FIG. 7 est représentée d'une part la consommation électrique Ce_i (en Wh) et d'autre part la consommation en eau Cw_i du lave-linge d'un foyer lors d'un cycle de 90 minutes comportant un essorage. On constate que Td = 22h07 et que Tf = 23h37. Sur la FIG. 8 est représentée d'une part la consommation électrique Ce_i, et d'autre part la consommation en eau Cw_i, du lave-linge d'un foyer lors d'un cycle de 150 minutes comportant deux essorages. On constate que Td = 22h07 et que Tf = 00h37.

A la fin de la phase de l'apprentissage, on dispose, par dispositif électrique consommateur de fluide, d'une courbe de charge en fluide lors d'une phase d'activité, et le cas échéant, de plusieurs courbes de charge correspondant respectivement à plusieurs modes de fonctionnement distincts.

Optionnellement, l'apprentissage est répété de temps en temps, par exemple périodiquement (tous les mois par exemple). Cela permet une adaptation aux changements de consommation dans un foyer.

Un exemple non limitatif de détermination par apprentissage des données représentatives de consommation moyenne de fluide et de durée de phase de consommation, par appareil non-électrique consommateur de fluide va maintenant être décrit. Cet exemple est illustré par l'algorigramme de la FIG. 9. Le procédé 900 illustré comprend :

- l'obtention (901) de données empiriques définissant, pour un ou plusieurs types d'appareil non-électrique consommateur de fluide, une durée respective de phase d'activité et un volume respectif de fluide consommé durant la phase d'activité ;
- l'obtention (902) de données représentatives de l'évolution dans le temps de la consommation globale en fluide (Cw) sur une période historique ;
- l'obtention (903) de données représentatives de l'évolution dans le temps de la consommation individuelle électrique de chaque appareil électrique consommateur de fluide pour la période historique ;
- l'identification (904), dans les parties des données de la consommation globale en fluide pendant lesquelles aucun dispositif électrique consommateur de fluide n'a été actif, des intervalles de temps correspondant aux critères de volume et de durée d'activité de phases d'activité d'appareils non-électriques consommateurs de fluide de chaque type d'appareil ;
- l'ajustement (905) d'au moins les valeurs de volume de consommation et de durée de phase d'activité sur base des valeurs de consommation et de durée de phase d'activité des intervalles identifiés.

De manière plus détaillée, le dispositif 101 dispose de données empiriques connues par ailleurs et qui décrivent, pour un ou plusieurs types appareils non-électriques consommateurs d'eau, habituellement présents dans un foyer, une durée de phase d'activité et un volume de fluide consommé durant la phase d'activité. De préférence, chaque type d'appareil possible est considéré. Ces valeurs peuvent être définies par des plages ou encore une valeur centrale et une marge autour de cette valeur centrale. Elles seront utilisées pour identifier, dans la courbe globale de charge de fluide, des périodes correspondant à des phases d'activité d'un type particulier d'appareil non-électrique consommateur de fluide.

Des exemples de données empiriques sont comme suit :

Chasse d'eau : Consommation en eau : 6L ± 3L / Durée : 0min30s à 1min30s

Douche : Consommation en eau : 30L à 80L / Durée : 2min00s à 8min00s

Bain : Consommation en eau : 110L à 220L / Durée : 10min00s à 20min00s

Comme précédemment, la phase d'apprentissage s'effectue sur un intervalle de temps de données historiques. Les périodes de cet intervalle pendant lesquelles aucun équipement électrique consommateur d'eau ne consomme électriquement sont prises en considération sur cet intervalle. Les périodes correspondant aux critères de volume et de durée d'activité d'appareils non-électriques consommateurs de fluide sont repérées comme correspondant potentiellement à la consommation de l'un de ces appareils et sont associées au type d'appareil correspondant. On ajuste alors au moins les valeurs moyennes de consommation et de durée de phase d'activité sur base des valeurs de consommation et de durée de phase d'activité des périodes identifiées.

Selon un exemple de réalisation, toutes les périodes éligibles sont mémorisées, et le nombre de périodes éligibles pour chaque type d'équipement est compté. La phase de repérage de périodes éligibles est poursuivie jusqu'à ce qu'un critère d'arrêt soit rempli. Ce critère d'arrêt est par exemple un critère lié au nombre minimal de périodes collectées pour chaque type d'équipement. Par exemple, ce nombre minimal est M avec M>1.

Par rapport à l'exemple ci-dessus, le nombre de périodes éligibles est au nombre de C pour la chasse d'eau non électrique, de D pour les douches et de B pour les bains. La phase d'apprentissage dure au moins une semaine et ne se termine que lorsque min(B, C, D) ≥ 3.

Pour chacun des types d'appareils potentiellement détectés, on détermine une valeur de consommation de fluide moyenne et une durée de phase d'activité moyenne en fonction des périodes associées avec le type d'appareil.

Par rapport à l'exemple précédent (Chasse d'eau non électrique, Douche, Bain) on retient comme valeur moyenne, la moyenne de consommation d'eau et la moyenne de durée des C phases mémorisées (cas de la chasse d'eau non électrique), des D phases mémorisées (cas des douches), et des B phases mémorisées (cas des Bains).

On a ainsi utilisé des données empiriques pour repérer des comportements correspondants dans la courbe de charge globale en fluide, et pour ajuster pour chaque type d'appareil tant la consommation moyenne que la durée de phase d'activité en fonction de mesures réelles effectuées dans le local. Les marges autour de cette valeur moyenne sont, au moins dans le présent exemple, reprise des données empiriques, mais elles peuvent aussi être ajustées en fonction des données historiques. Par exemple, on peut déduire les marges de l'apprentissage en déterminant un écart type $\sigma$ et en prenant une marge à $\pm 3\sigma$. D'autres fonctions que l'écart type et d'autres coefficients que le coefficient '3' peuvent être envisagés et ces exemples ne sont donnés qu'à titre illustratif.

En reprenant l'exemple précédent, les valeurs ajustées sont par exemple comme suit :

Chasse d'eau non électrique : 6.1L ± 3L / 45s ± 30s
Douche : 48L ± 10L / 4 minutes ± 3 minutes
Bain : 151L ± 55L / 14 minutes ± 5 minutes

Selon une variante de réalisation, si aucune période potentielle d'utilisation n'est repérée pour un type d'appareil, par exemple au bout d'une semaine, on utilise les données empiriques pour déterminer une moyenne de consommation de fluide et une moyenne de durée de phase d'activité, et la condition de fin de la phase d'apprentissage ne tient alors pas compte dudit type d'appareil.

Pour reprendre l'exemple précédent, pour les bains, on considère une plage de consommation d'eau de 110L à 220L avec une valeur moyenne à 165L et une plage de durée de 10min00S à 20min00s avec une valeur moyenne de 15min00s.

La FIG. 10 est un algorigramme d'un procédé 1000 de détermination de la courbe de charge individuelle de fluide (Ce_i) pour une phase d'activité d'appareil électrique (i) consommateur de fluide, qui n'exige pas d'apprentissage préalable, la détermination étant effectuée à la volée avec les données en entrée du procédé.

Le procédé de la FIG. 10 comprend, pour chaque appareil électrique également consommateur de fluide :

- la détection (1001) d'une ou plusieurs durées de phase d'activité de l'appareil électrique consommateur de fluide ;
- pour chaque durée de phase d'activité détectée, l'identification (1002) de la ou des parties des données représentatives de l'évolution en fonction du temps de la consommation en fluide globale temporellement correspondantes aux phases d'activité détectées, seules les parties des données de consommation en fluide globale pendant lesquelles aucun autre dispositif électrique consommateur de fluide n'est actif étant considérées ;
- pour chaque durée de phase d'activité, détermination (1003) parmi les X parties les plus récemment identifiées de celle avec une consommation minimale cumulée sur la durée, la partie déterminée étant prise comme données représentatives de l'évolution en fonction du temps de la consommation électrique individuelle (Ce_i) pour la phase d'activité considérée de l'appareil, avec X>1.

Comme décrit par ailleurs, on peut obtenir la courbe de charge individuelle de fluide (Ce_i) pour l'appareil électrique consommateur de fluide par combinaison de la ou des courbes de charge en fluide de phase d'activité en fonction des phases d'activité détectées dans la courbe de charge électrique individuelle de l'appareil.

X pourra être pris par exemple égal à trois. Le fait de considérer plusieurs parties de même durée de la courbe de charge globale de fluide permet de réduire l'impact d'équipements non-électriques consommateurs d'eau.

Selon un mode de réalisation, la courbe de charge en fluide par phase d'activité d'un appareil est continuellement mise à jour.

La FIG. 11 est un algorigramme d'un procédé de détermination des données représentatives de la consommation moyenne de fluide et de durée de phase de consommation, par appareil non-électrique consommateur de fluide, sans apprentissage préalable. Dans ce cas, on utilise les données empiriques de consommation de fluide et de durée de phase d'activité, sans ajustement sur base des données effectives de consommation reçues pour le foyer considéré. Si les données de consommation sont fournies sous la forme d'une plage (par exemple « 110 litres à 220 litres »), le dispositif 101 déterminera une valeur moyenne (« 165 litres »). La courbe de charge pour la phase d'activité sera la valeur moyenne constante de consommation en continu sur la durée de la phase.

[Liste des documents cités]

(i) Simon HENRIET « La désagrégation de consommations électriques dans les grands bâtiments : analyses, simulations et apprentissage non-supervisé par factorisation de matrices » Signal and Image Processing. Institut Polytechnique de Paris, 2020. NNT : 2020IPPAT007

**Revendications**

1. Procédé mis en œuvre par un dispositif comprenant un processeur pour déterminer la consommation de fluide par un appareil non-électrique dans un système comprenant au moins un appareil électrique consommateur de fluide, et au moins un appareil non-électrique consommateur de fluide, le procédé comprenant :

   - l'obtention (501) :

      a) de données représentatives de l'évolution en fonction du temps de la consommation électrique individuelle (Ce_i) pour chaque appareil électrique (i) consommateur de fluide du système, sur une période de temps ;
      b) de données représentatives de l'évolution en fonction du temps de la consommation de fluide globale (Ccw1) de tous les appareils consommateurs de fluide du système sur la période de temps ;

      - la détermination (502) de données représentatives de l'évolution en fonction du temps sur la période de la consommation de fluide (Cw_i) de chaque appareil électrique (i) consommateur de fluide par identification de phases d'activité de cet appareil électrique dans les données représentatives de l'évolution en fonction du temps de la consommation électrique individuelle (Ce_i) de cet appareil électrique ;
      - la détermination (503) de données représentatives de l'évolution en fonction du temps sur la période, d'une première consommation de fluide restante autre que celle due aux appareils électriques consommateurs de fluide ;
      - la désagrégation (504) des données représentatives de l'évolution en fonction du temps sur la période de la première consommation de fluide restante (Ccw2), par appareil non-électrique consommateur de fluide, par recherche de phases d'activité de l'appareil non-électrique considéré dans les données représentatives de la première consommation de fluide restante, une phase d'activité étant identifiée par un volume de consommation de fluide lors de la phase d'activité et une durée de phase d'activité.

2. Procédé selon la revendication 1, comprenant l'assemblage de courbes de charge en fluide correspondant aux différentes phases d'activité identifiées dans les données représentatives de l'évolution en fonction du temps de la consommation électrique individuelle (Ce_i) de l'appareil électrique, le dispositif disposant, pour chaque phase d'activité de cet appareil électrique d'une courbe de charge en fluide couvrant cette phase d'activité.

3. Procédé selon la revendication 1 ou 2, comprenant la détermination (505) de données représentatives de l'évolution en fonction du temps sur la période d'une seconde consommation de fluide restante (Ccw3), par soustraction aux données représentatives de l'évolution dans le temps de la première consommation de fluide restante (Ccw2), des données représentatives de l'évolution dans le temps des consommations correspondant aux phases d'activité trouvées pour les appareils non-électriques consommateurs de fluide.

4. Procédé selon l'une des revendications précédentes, dans lequel un appareil non-électrique consommateur de fluide comprend une pluralité de modes de fonctionnement, chaque mode de fonctionnement étant associé à une phase d'activité identifiée par un volume de consommation et une durée de phase de consommation propres.

5. Procédé selon l'une des revendications précédentes, la recherche d'une phase d'activité comprenant l'identification d'une consommation constante correspondant au volume de consommation de cette phase d'activité, sur la durée de la phase d'activité.

6. Procédé selon l'une des revendications 1 à 5, comprenant une phase d'apprentissage préalable pour l'obtention des données représentatives de l'évolution de la consommation de fluide (Cw_i) par appareil électrique consommateur de fluide en fonction du temps, pour une phase d'activité de l'appareil électrique consommateur de fluide considéré, la phase d'apprentissage comprenant pour chaque appareil électrique (i) consommateur de fluide :

- l'identification (601) de N phases d'activité lors desquelles seul le dispositif considéré a été actif, avec N>1 ;
- pour chaque phase d'activité identifiée, l'extraction (602) d'une partie correspondante en temps de données représentatives de l'évolution dans le temps de la consommation en fluide globale historique ;
- la sélection (603), parmi les parties extraites, de la partie avec la consommation de fluide cumulée la plus faible en tant que données représentatives de l'évolution de la consommation de fluide (Cw_i) par appareil électrique consommateur de fluide en fonction du temps.

7. Procédé selon l'une des revendications 1 à 6, comprenant une phase d'apprentissage préalable pour la détermination d'un volume et d'une durée pour une phase d'activité d'un appareil non-électrique consommateur de fluide, la phase d'apprentissage comprenant :

- l'obtention (901) de données empiriques définissant, pour un ou plusieurs types d'appareil non-électrique consommateur de fluide, une durée respective de phase d'activité et un volume respectif de fluide consommé durant la phase d'activité ;
- l'obtention (902) de données représentatives de l'évolution dans le temps de la consommation globale en fluide (Cw) sur une période historique ;
- l'obtention (903) de données représentatives de l'évolution dans le temps de la consommation individuelle électrique de chaque appareil électrique consommateur de fluide pour la période historique ;
- l'identification (904), dans les parties des données de la consommation globale en fluide pendant lesquelles aucun dispositif électrique consommateur de fluide n'a été actif, des intervalles de temps correspondant aux critères de volume et de durée d'activité de phases d'activité d'appareils non-électriques consommateurs de fluide de chaque type d'appareil ;
- l'ajustement (905) d'au moins les valeurs de volume de consommation et de durée de phase d'activité sur base des valeurs de consommation et de durée de phase d'activité des intervalles identifiés.

8. Procédé selon l'une des revendications 1 à 7, dans lequel l'obtention de données représentatives de l'évolution en fonction du temps de la consommation électrique individuelle (Ce_i) pour chaque appareil électrique (i) consommateur de fluide du système, sur une période de temps comprend :

- la détection (1001) d'une ou plusieurs durées de phase d'activité de l'appareil électrique consommateur de fluide ;
- pour chaque durée de phase d'activité détectée, l'identification (1002) de la ou des parties des données représentatives de l'évolution en fonction du temps de la consommation en fluide globale temporellement correspondantes aux phases d'activité détectées, seules les parties des données de consommation en fluide globale pendant lesquelles aucun autre dispositif électrique consommateur de fluide n'est actif étant considérées ;
- pour chaque durée de phase d'activité, détermination (1003) parmi les X parties les plus récemment identifiées de celle avec une consommation minimale cumulée sur la durée, la partie déterminée étant prise comme données représentatives de l'évolution en fonction du temps de la consommation électrique individuelle (Ce_i) pour la phase d'activité considérée de l'appareil, avec X>1 .

9. Procédé selon l'une des revendications 1 à 8, dans laquelle le système est un foyer domestique (200, 300, 400).

10. Procédé selon l'une des revendications 1 à 9, comprenant au moins l'un parmi :

- une transmission des données représentatives de l'évolution en fonction du temps sur la période de la première consommation de fluide restante (Ccw2), par appareil non-électrique consommateur de fluide ;
- un affichage des données représentatives de l'évolution en fonction du temps sur la période de la première consommation de fluide restante (Ccw2), par appareil non-électrique consommateur de fluide.

11. Dispositif (101, 201, 301, 401) muni d'un processeur (103) et d'une mémoire (102) comportant des instructions logicielles, le dispositif étant amené à mettre en œuvre l'un des procédés des revendications 1 à 10 lorsque le processeur exécute les instructions.

12. Dispositif selon la revendication précédente, le dispositif étant l'un parmi : un compteur électrique, un serveur.

**Fig. 1**

**Fig. 2**

**Fig. 3**

**Fig. 4**

## 501

Obtention :
a) de données représentatives de l'évolution en fonction du temps de la consommation électrique individuelle (Ce_i) pour chaque appareil électrique (i) consommateur de fluide du système, sur une période de temps;
b) de données représentatives de l'évolution en fonction du temps de la consommation de fluide globale (Ccw1) de tous les appareils consommateurs de fluide du système sur la période de temps.

## 500

## 502

Détermination de données représentatives de l'évolution en fonction du temps sur la période de la consommation de fluide (Cw_i) de chaque appareil électrique consommateur de fluide.

## 503

Détermination de données représentatives de l'évolution en fonction du temps sur la période, d'une première consommation de fluide restante autre que celle due aux appareils électriques consommateurs de fluide.

## 504

Désagrégation des données représentatives de l'évolution en fonction du temps sur la période de la première consommation de fluide restante (Ccw2), par appareil non-électrique consommateur de fluide, par recherche de phases d'activité de l'appareil non-électrique considéré dans les données représentatives de la première consommation de fluide restante, une phase d'activité étant identifiée par un volume de consommation de fluide lors de la phase d'activité et une durée de phase d'activité.

## 505

Détermination de données représentatives de l'évolution en fonction du temps sur la période d'une seconde consommation de fluide restante (Ccw3), par soustraction aux données représentatives de l'évolution dans le temps de la première consommation de fluide restante (Ccw2), des données représentatives de l'évolution dans le temps des consommations correspondant aux phases d'activité trouvées pour les appareils non-électriques consommateurs de fluide.

**Fig. 5**

600

Détermination par apprentissage de la courbe de charge individuelle en fluide de chaque appareil électrique consommant du fluide, pour une phase d'activité

601
Pour chaque appareil électrique (i) consommateur de fluide: Identification de N (N>1) phases d'activité lors desquelles seul le dispositif considéré a été actif

602
Pour chaque phase temporelle identifiée, extraction de la partie correspondante en temps d'une courbe de charge en fluide globale historique

603
Sélection, parmi les parties extraites, de la partie avec la consommation de fluide cumulée la plus faible pour représenter la courbe de charge individuelle pour la phase d'activité

**Fig. 6**

**Fig. 7**

**Fig. 8**

900

Détermination par apprentissage d'une consommation moyenne de fluide et une durée de phase de consommation, pour chacun des un ou plusieurs appareils non-électriques consommateurs de fluide

**901**
Obtention de données empiriques définissant, pour un ou plusieurs types d'appareil non-électrique consommateur de fluide, une durée respective de phase d'activité et un volume respectif de fluide consommé durant la phase d'activité.

**902**
Obtention de données représentatives de l'évolution dans le temps de la consommation globale en fluide (Cw) sur une période historique.

**903**
Obtention de données représentatives de l'évolution dans le temps de la consommation individuelle électrique de chaque appareil électrique consommateur de fluide pour la période historique.

**904**
Identification, dans les parties des données de la consommation globale en fluide pendant lesquelles aucun dispositif électrique consommateur de fluide n'a été actif, des intervalles de temps correspondant aux critères de volume et de durée d'activité de phases d'activité d'appareils non-électriques consommateurs de fluide de chaque type d'appareil .

**905**
Ajustement d'au moins les valeurs moyennes de consommation et de durée de phase d'activité sur base des valeurs de consommation et de durée de phase d'activité des périodes identifiées.

**Fig. 9**

**1000**

**1001**
Détection d'au moins une durée de phase d'activité de l'appareil électrique consommateur de fluide.

**1002**
Pour chaque durée de phase d'activité détectée, l'identification de la ou des parties des données représentatives de l'évolution en fonction du temps de la consommation en fluide globale temporellement correspondantes aux phases d'activité détectées, seules les parties des données de consommation en fluide globale pendant lesquelles aucun autre dispositif électrique consommateur de fluide n'est actif étant considérées.

**1003**
Pour chaque durée de phase d'activité, détermination parmi les X parties les plus récemment identifiées de celle avec une consommation minimale cumulée sur la durée, la partie déterminée étant prise comme données représentatives de l'évolution en fonction du temps de la consommation électrique individuelle (Ce_i) pour la phase d'activité considérée de l'appareil, avec X>1

**Fig. 10**

**1100**

**1101**
Obtention de données empiriques définissant, pour un ou plusieurs types d'appareil non-électrique consommateur de fluide, une durée respective de phase d'activité et un volume respectif de fluide consommé durant la phase d'activité.

**1102**
Obtention d'une courbe de charge en fluide (Cw) d'un appareil non-électrique consommateur de fluide pour une phase d'activité en considérant une consommation moyenne constante sur la phase d'activité, ou la consommation moyenne constante est fonction du volume respectif.

**Fig. 11**

Europäisches Patentamt
European Patent Office
Office européen des brevets

## RAPPORT DE RECHERCHE EUROPEENNE

Numéro de la demande

EP 25 21 1590

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | NGUYEN KHOI A. ET AL: "Water end-use classification with contemporaneous water-energy data and deep learning network", ENGINEERING AND TECHNOLOGY INTERNATIONAL JOURNAL OF COMPUTER AND SYSTEMS ENGINEERING, vol. 12, no. 1, 2018, XP093276549, * abrégé; figures 1,2 * * le document en entier * ----- | 1-12 | INV. G01D4/00 G06Q50/06 ADD. G01D4/12 G01D4/10 |
| X | VITTER J S ET AL: "A non-intrusive approach for classifying residential water events using coincident electricity data", ENVIRONMENTAL MODELLING & SOFTWARE, ELSEVIER, AMSTERDAM, NL, vol. 100, 5 décembre 2017 (2017-12-05), pages 302-313, XP085313603, ISSN: 1364-8152, DOI: 10.1016/J.ENVSOFT.2017.11.029 * le document en entier * ----- | 1-12 | |
| X | VITTER J. SCOTT ET AL: "Water Event Categorization Using Sub-Metered Water and Coincident Electricity Data", WATER, vol. 10, no. 6, 31 mai 2018 (2018-05-31), page 714, XP093276448, CH ISSN: 2073-4441, DOI: 10.3390/w10060714 * le document en entier * ----- | 1-12 | DOMAINES TECHNIQUES RECHERCHES (IPC) G01D G06Q G01F |

Le présent rapport a été établi pour toutes les revendications

| Lieu de la recherche | Date d'achèvement de la recherche | Examinateur |
|---|---|---|
| Munich | 16 mars 2026 | Paraf, Edouard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- La désagrégation de consommations électriques dans les grands bâtiments : analyses, simulations et apprentissage non-supervisé par factorisation de matrices. **SIMON HENRIET**. Signal and Image Processing. Institut Polytechnique de Paris, 2020